# EUROPEAN PATENT SPECIFICATION

(11) **EP 0 594 526 B1**
(45) Date of publication and mention of the grant of the patent: **03.09.1997**
(21) Application number: 93500145.3
(22) Date of filing: 21.10.1993
(51) Int. Cl.: B60N 2/22

(54) **A mechanism for adjusting the inclination of a vehicle seat cushion**
Vorrichtung zum Regeln der Neigung eines Sitzkissens eines Fahrzeugsitzes
Dispositif de réglage de l'inclinaison du coussin d'un siège de véhicule

(30) Priority: 22.10.1992 ES 9202113
(43) Date of publication of application: 27.04.1994
(73) Proprietor: INDUSTRIAS ESTEBAN, S.A., E-31012 Pamplona (Navarra) (ES)
(72) Inventor: Remacha Indurain, Angel, Pamplona, (Navarra) (ES)
(74) Representative: Carpintero Lopez, Francisco

(56) References cited:
- EP-A- 0 383 955
- EP-A- 0 418 731
- EP-A- 0 508 964
- FR-A- 2 356 537
- FR-A- 2 560 757

## Description

### OBJECT OF THE INVENTION

The present invention relates to a mechanical device specifically designed to enable the degree of inclination of the cushion or seat as such to be changed or adjusted in a seat for motor vehicles, and in particular for coaches.

More specifically, the adjustment mechanism subject hereof allows the changes in the reclination of the backrest to be transmitted in synchrony to the cushion, thereby allowing the passenger to ergonomically vary the position of rest, a suitable proportion being maintained between the inclination of the seat and the inclination of the cushion, cancelling the tendency of the body to slide on the cushion in the direction of movement of the vehicle when the backrest is in the position of maximum reclination, in which position the body is slightly retracted, there being no need for a larger space in front for the passenger's knees.

### BACKGROUND OF THE INVENTION

Conventionally, seats for vehicles of the aforesaid kind are fitted with means for the backrest to be reclined, designed to achieve a position of enhanced bodily rest for the user. And yet, because the seat is reclined without the joint movement of the cushion, there is a tendency for the body to move forward, which on the one hand causes the seat as a whole to be uncomfortable and on the other tends to cause the user's knees to bang against the seat that is immediately in front.

In an attempt to overcome this problem known solutions are provided for instance in EP-A-0 418 731, in which the cushion or seat as such is linked to its support by means of hinge rods that together with other rods joining the said support and the backrest, cause the cushion to be tilted as the backrest is tilted, these operations taking place against the force of heavy-duty springs, a control also being fitted to lock the seat in the selected position.

However, in the solution used in this European patent application, the seat as a whole may move forward significantly while the backrest and the cushion are being tilted, which means that a greater space or distance between seats is required in order for the user not to bang his or her knees against the seat immediately in front; in addition, handling the locking elements can be slow and cumbersome.

Another solution is provided in European patent EP-B-0 383 955, in which the front area of the cushion or seat as such is hinged to the support and rests upon the latter through a spring, but in this case though the cushion does not move forward when the backrest is tilted, there is no direct and proportional relation between the tilting of one element and the other, which means that although the cushion drags the backrest when tilted, when only the backrest is tilted the cushion undergoes no positional change whatsoever, and hence needs to be driven in addition to and distinct from the driving of the backrest.

FR-A-2 356 537 is also known which relates to a mechanism for adjusting a vehicle seat wherein the rear of the cushion of the seat as such is connected to a pivotable shaft fixed by means of connecting rods, whereas the front of said cushion is held by means of a guided slide coupling, which cause the cushion and hence the legs of users to move backwards or forwards when the seat is inclined; therefore, if used in applications such as buses or coaches, this mechanism could cause the legs of users to contact with the backrest of the seat in front.

### DESCRIPTION OF THE INVENTION

The mechanism of the present invention has the features set forth in the claim and allows the cushion to be inclined in perfect synchrony with and proportionally to the tilting of the backrest without the said cushion moving forward.

More specifically and in order to achieve the above, the cushion and backrest structures, pivotally connected to each other substantially above the lower end of the said backrest structure, are also linked by means of a gas or mechanical spring, having a multi-position function, controlled by a lever, which spring specifically extends over a front support fixed to the cushion structure, to which it is linked by means of a jaw, being also linked to the rear and lower end of the backrest structure, the said spring being driven by a lever and through the appropriate cam.

In addition to the structure described and as an important feature of the invention, the front area of the cushion structure is assembled on a fixed body, through the aforesaid gas spring support, whereas at its rear area the said cushion is only linked to the backrest structure through the pin hinging the same to the latter, this backrest structure actually resting upon a fixed rear body, in particular through a cranked rod.

In accordance with this structure when the backrest structure is tilted backwards through the said spring, by unlocking the same and by exerting front pressure upon the same, the tilting of the structure brings about the tilting of the cranked rod, whereupon the back portion of the cushion is slightly lowered and is hence slightly tilted back, in proportion to the extent to which the backrest is tilted.

### DESCRIPTION OF THE DRAWINGS

In order to provide a full description and contribute to the complete understanding of the characteristics of this invention, a set of drawings is attached to the specification which, while purely illustrative and not fully comprehensive, shows the following:

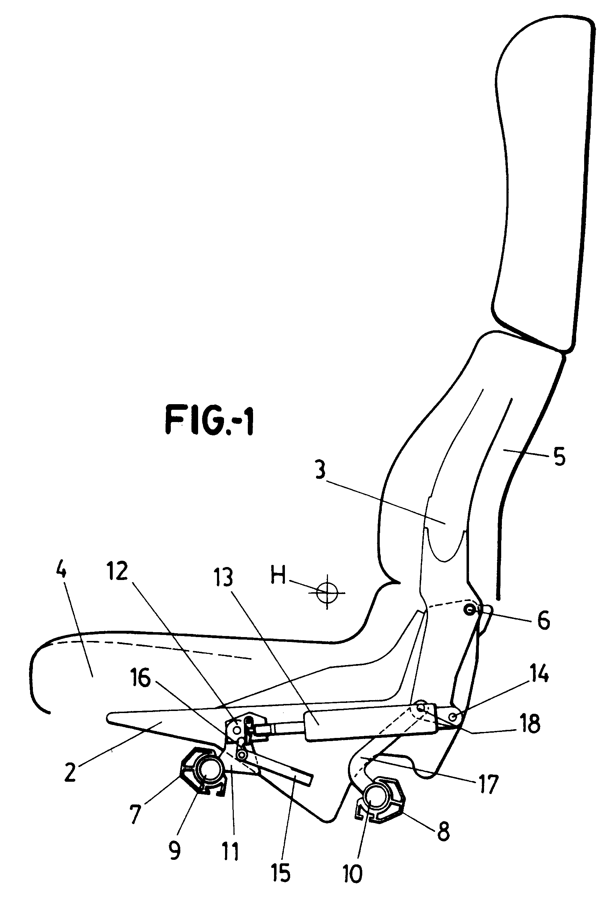

Figure 1.- Is a diagrammatic side elevation view of a vehicle seat fitted with the mechanism of the present invention for adjusting the inclination of its cushion, which seat is shown with the backrest at its maximum forward position.
Figure 2.- Is a view similar to that of figure 1, showing the same seat in a position of maximum recline or rear folding of its backrest.

### PREFERRED EMBODIMENT OF THE INVENTION

The above figures show that the adjustment mechanism subject hereof is applicable for vehicle seats (1) in which a cushion structure (2) and a backrest structure (3) are established, the said cushion structure being mounted upon the seat (4) itself, whereas the structure (3) is in turn mounted with the padded body (5) making up the backrest as such, the said elements being linked to each other through a transverse swivel pin (6) that is substantially displaced upwards from the lower end of the backrest structure (3) as can be duly observed in the figures.

The seat (1) is as a whole supported by a fixed front body (7) and a fixed rear body (8) in particular by means of respective pins (9 and 10) that can turn or swing, the front pin (9) being positively fixed to a support (11), rigidly joined to the front portion of the cushion structure (2) and in turn representing the hinge element, through a jaw (12), for a gas spring (13) or a mechanical spring, the other end of which is hinged (at 14) to the lower end of the backrest structure (3) and that in the event of a gas spring (13) being provided, is driven by a lever (15) through a cam (16).

The cushion structure (2) rests upon the fixed front body (7) through the support (11), whereas the actual rear fixed body (8) does so through the actual backrest structure (3), which does not rest directly upon the said fixed body (8) either and rather does so with the assistance of a cranked rod (17) the top end of which is hinged (at 18) through the respective bolt or transverse pin to the lower end of the backrest structure (3), relatively close to the point (14) at which the said structure (3) is hinged to the spring (13) whereas its lower end is associated to the said pin (10), which is a crankshaft having some play in said fixed body (8).

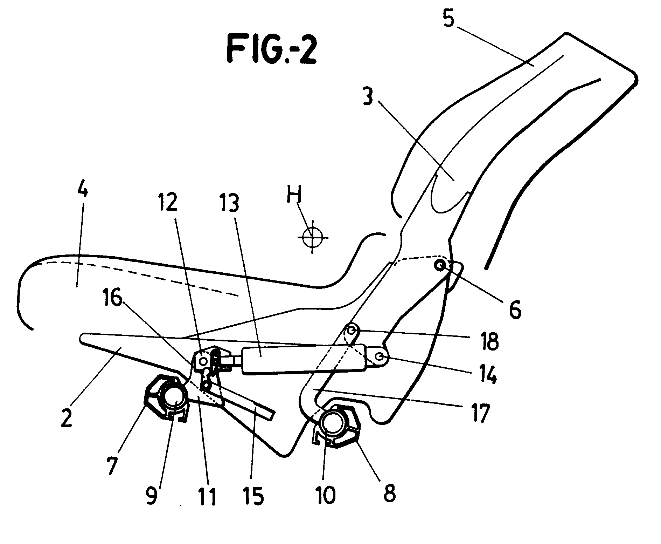

In accordance with this structure and as aforesaid, when the backrest (5) is tilted backwards after duly releasing the spring (13), this tilting brings about a substantial elevation of the said hinge pin (18), as shown in figure 2, and because the said swivel pin (6) cannot rise, being linked to the pin (10) through the cranked rod (17), what happens in practice is that at the same time as the backrest (5) is folded back the rear portion of the cushion (4) is lowered in the same proportion, i.e., the said cushion is also tilted down, in particular in a proportion in relation to the turning radius of the said rod (17), thereby for point "H" on the seat to change, causing the passenger to change his or her position of rest ergonomically, depending upon the reclination of the backrest (5), thereby cancelling the tendency of the cushion (4) to slide in the direction of movement of the vehicle, when the seat is in the position of maximum recline, for in such position the said point "H" is lowered and moved back slightly.

## Claims

1. A mechanism for adjusting the inclination of a vehicle seat cushion (4), wherein a front portion of the seat cushion structure is pivotally connected to a fixed front body (7) and a rear portion of the seat cushion structure is pivotally connected to the backrest structure (3), the lower end of said backrest structure (3) being pivotally connected to a cranked rod (17) which is in turn pivotally connected to a rear fixed body (8), said pivotal connection between the cranked rod (17) and the lower end of said backrest structure (3) being located at a position below said pivotal connection between said cushion structure (2) and said backrest structure (3) such that when the backrest structure (3) is tilted rearwardly thanks to the gas or mechanical spring (13) used for adjusting the backrest position, the rear portion of said seat cushion structure is lowered in proportion to the degree of reclination of the backrest and to the turning radius of the said cranked rod (17).

## Patentansprüche

1. Vorrichtung zum Regeln der Neigung eines Sitzkissens eines Fahrzeugsitzes, bei welchem ein frontaler Bereich der Struktur des Sitzkissens des Sitzes gelenkig mit einem vorderen festen Körper (7) und eine hinterer Bereich der Struktur des Sitzkissens des Sitzes gelenkig mit einer Rückenlehnenstruktur (3) und das untere Ende der Rückenlehnenstruktur (3) gelenkig mit einer Kurbelstange (17) verbunden ist,, die ihrerseits gelenkig mit einem hinteren festen Körper (8) in Verbindung steht und die Gelenkverbindung zwischen der Kurbelstange (17) und dem unteren Ende der Rückenlehnenstruktur (3) unterhalb der Gelenkverbindung zwischen der Sitzkissen- (2) und der Rückenlehnenstruktur (3) liegt, und zwar in der Weise, dass der hintere Bereich der Struktur des Sitzkissens dann, wenn die Rückenlehnenstruktur (3) mit Hilfe einer mechanischen Feder oder Gasfeder (13), die zum Regeln der Stellung der Rückenlehne verwendet wird, im Verhältnis der Neigung der Rückenlehne und des Drehradius der Kurbelwelle (17) absinkt.

## Revendications

1. Dispositif de réglage de l'inclinaison du coussin d'un siège de véhicule, où une partie avant de la structure du coussin du siège est connectée d'une manière articulée à un corps fixe avant (7) et une partie arrière de la structure du coussin du siège est connectée d'une manière articulée à une structure de dossier (3), l'extrémité inférieure de cette structure de dossier (3) étant connectée d'une manière articulée à une bielle manivelle (17) qui est à son tour connectée d'une manière articulée à un corps fixe arrière (8), cette connexion articulée entre la bielle manivelle (17) et l'extrémité inférieure de cette structure de dossier (3) se trouvant dans une position en-dessous de cette connexion articulée entre cette structure du coussin (2) et cette structure de dossier (3) de telle sorte que lorsque la structure de dossier (3) est basculée en arrière grâce au ressort mécanique ou à gaz (13) qui est utilisé pour l'ajustement de la position du dossier, la partie arrière de cette structure de coussin de siège descend proportionnellement au degré d'inclinaison du dossier et du rayon de rotation de la bielle manivelle (17) mentionnée.
